# EUROPEAN PATENT APPLICATION

(11) **EP 3 505 432 A1**
(43) Date of publication of application: **03.07.2019**
(21) Application number: 17842499.0
(22) Date of filing: 13.07.2017
(51) Int. Cl.: B62K 3/00, B62K 17/00, B62M 1/00, B62M 1/24, B62M 1/26, B62M 1/28, B62M 1/30, B62M 1/32, A63B 23/00, A63B 23/04, F03G 5/06

(54) **URBAN ELLIPTICAL BICYCLE**

(30) Priority: 23.08.2016 CL 20162122
(71) Applicant: Ruz Campos, Carlos, Puente Alto - Codigo Postal: 8150000 (CL)
(72) Inventor: Ruz Campos, Carlos, Puente Alto - Codigo Postal: 8150000 (CL)
(74) Representative: Cornuejols, Georges
(86) International application number: PCT/CL2017/000020
(87) International publication number: WO 2018/035624

(57) **Abstract**

To produce an elliptical bicycle that can be used by persons of all ages safely, comfortably and easily, a bicycle with simple and original mechanisms has been created, allowing the user to feel safe when mounting the bicycle and to be able to handle same with ease and pleasure and to enjoy the journey. Using these original designs and mechanisms, a compact bicycle has been created, which is made easy and safe to move from one place to another by the ability to lower the handlebars and at the same time collapse the steering column and by a simple, silent, compact drive system formed by footboards, pedals, a bottom bracket and wheels. The bicycle has the advantage of providing easy and safe travel and has a gear-shifting system that can have between 3 and 12 different speeds and a caliper braking system on the rear and front wheels.

## Description

### Urban elliptical bicycle

The following application is aimed at an urban elliptical bicycle with safe, easy and comfortable maneuverability. It specifically relates to an urban elliptical bicycle which can be used by children and adults of all ages, due to the simple and safe mechanism and design thereof.

### State of the art

Currently, the effectiveness and advantages of elliptical bicycles is widely established, and as such there are some available on the market such as the one registered under number CN102438883 (A), however, the main drawback of these bicycles lies in the fact that in order to achieve movement, they have a dangerous mechanism and design, which is complicated and uncomfortable for the rider to maneuver and move, and for those around him or her.

The solution proposed in the present application is based on an original mechanism and design of a bicycle, achieving a more compact and quiet bicycle, keeping the rider at a low height with respect to the ground and thus involving less risk when for the rider when riding, and furthermore it lacks dangerous rotating arms, achieving a more comfortable handling of the bicycle both when beginning a ride and when ending a ride, with simple and safe turns.

The new mechanism consists of the incorporation of the pedals and crankset (sprocket) coupled to the ends of an axle inside the bottom bracket shell, where also on this shell, by means of bearings, the rear wheel is mounted with a gear attached, and by means of a chain, the crankset is connected to a gear attached to a variable geared hub and also, by means of another chain, the gear of the rear wheel is connected to another gear attached to the other end of the geared hub.

Thus, a safe rotation of the pedals is achieved given that all of the movement is inside the circumference of the wheel, thereby achieving a more compact bicycle and a positioning of the rider at a lower height, which is therefore safer and more comfortable.

Another advantage is the movement of the arms where the footboards of the rider are installed, which move along cylindrical shafts by means of linear bearings with seals, achieving a safe, quiet and clean movement, preventing the accumulation of dirt.

Furthermore, the tube supporting the handlebars has an adjustment clamp that allows the height thereof to be adjusted and also has an adjustment pin that allows the handlebars to fold, thereby achieving comfort for the rider by allowing them to be able to adjust the height of the handlebars according to their own height and, furthermore, making the bicycle easy to transport by being able to fold the handlebars and lower the height of the bicycle.

### Brief description of the figures

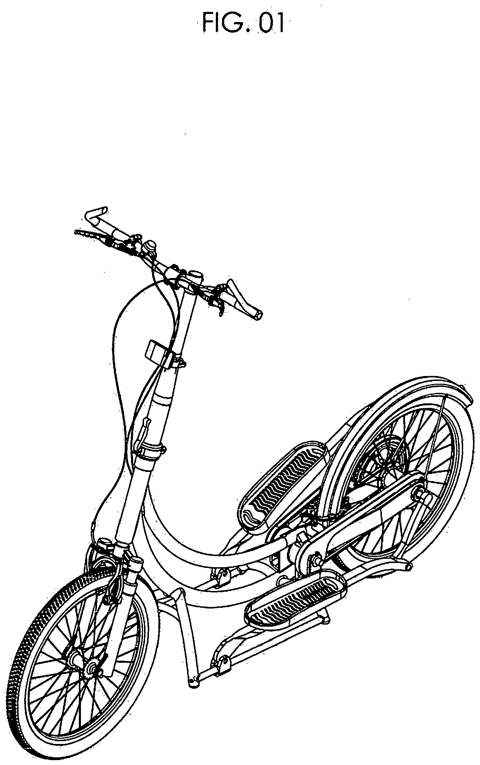

Fig. 1 shows a front and right side perspective view of the present industrial design.

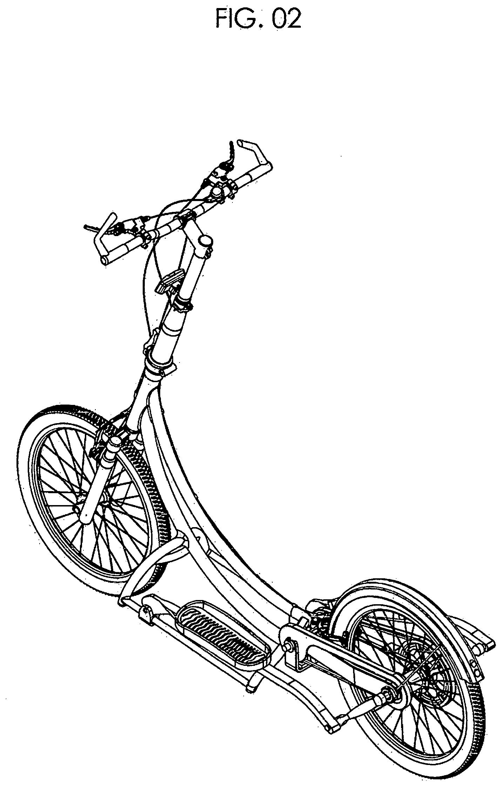

Fig. 2 shows a rear and right side perspective view of the same.

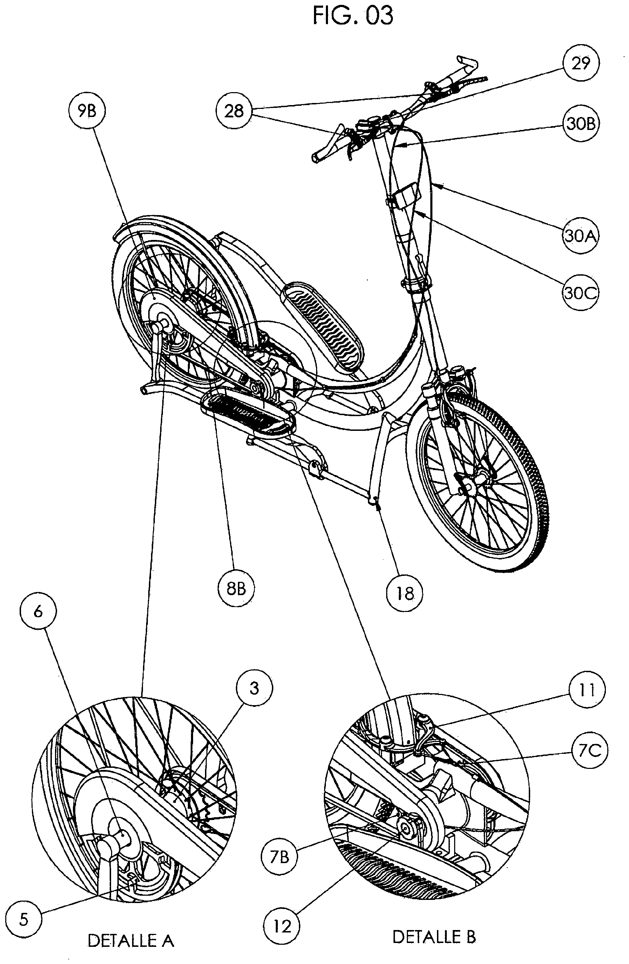

Fig. 3 shows a front and left side perspective view of the same with the parts being numbered and a detailed view for clarification.

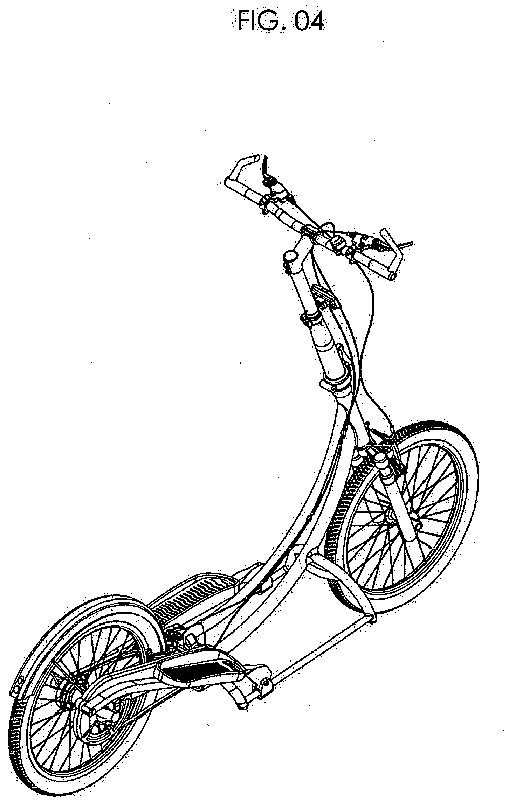

Fig. 4 shows a rear and left side perspective view of the same.

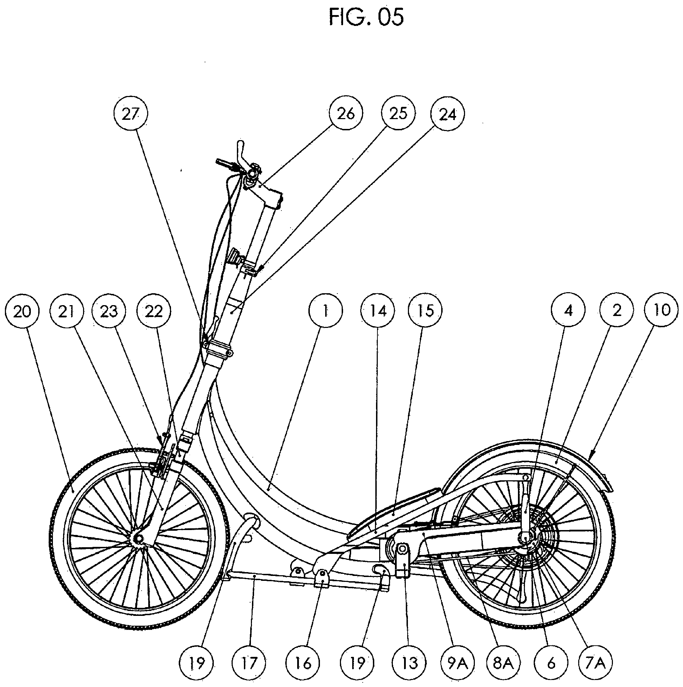

Fig. 5 shows a front and right view of the same, with the parts numbered.

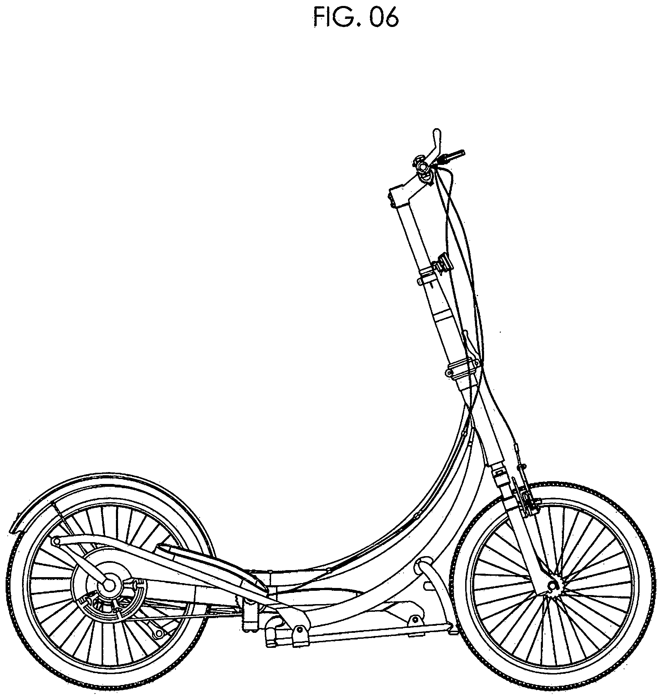

Fig. 6 shows a left profile view of the same.

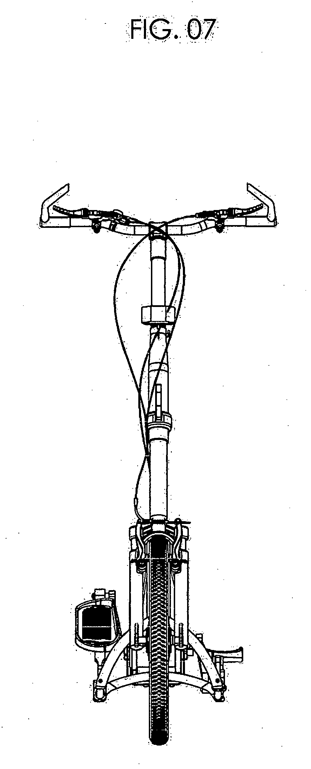

Fig. 7 shows a front elevation view of the same.

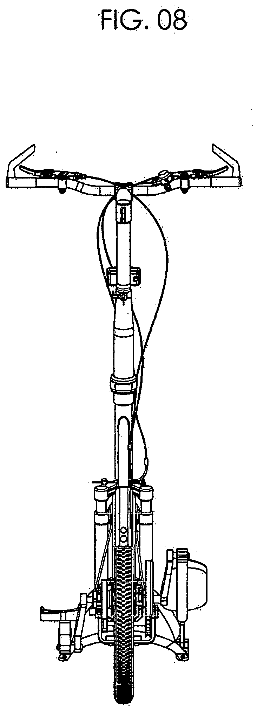

Fig. 8 shows a rear elevation view of the same.

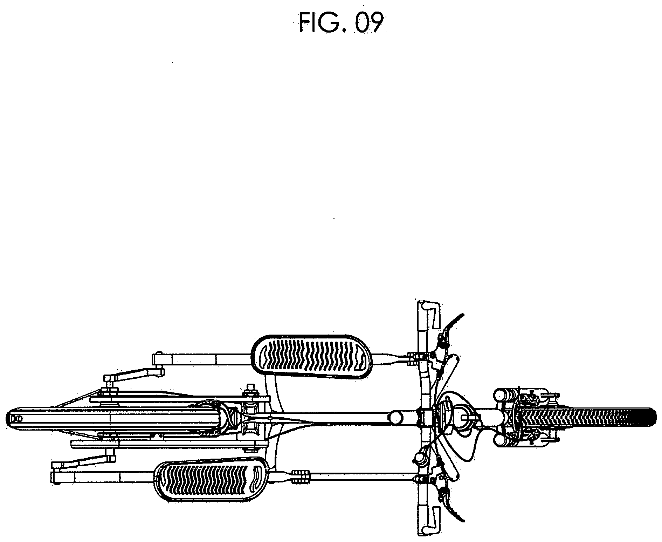

Fig. 9 shows an upper plan view of the same.

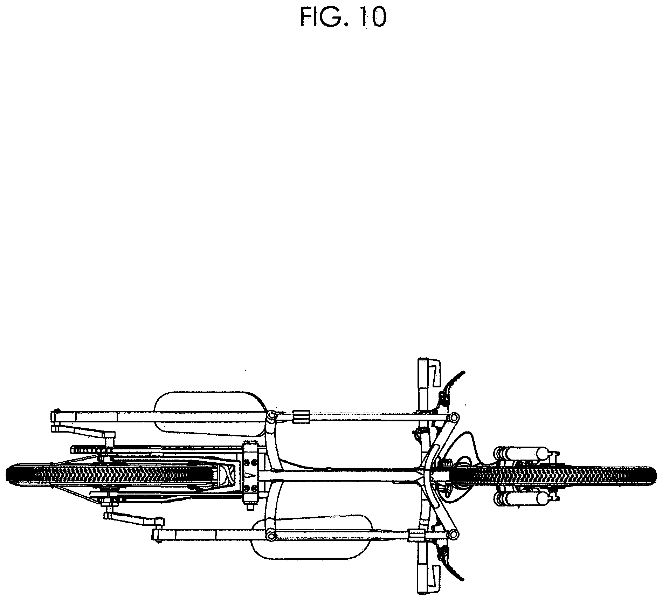

Fig. 10 shows a lower plan view of the same.

### List and description of the pieces of the elliptical bicycle

### Detailed description of the invention

Urban elliptical bicycle with safe, easy and comfortable maneuverability, which includes a pair of pedals (4), one of them with a crankset or sprocket (5), both pedals (4) being coupled to each end of an axle (6) which is supported inside the bottom bracket shell (3) by means of two coupled bearings, achieving an independent movement of the bottom bracket shell (3), which is attached by means of nuts and lock nuts to the main frame or body of the bicycle (1), in turn, mounted on said bottom bracket shell (3), on two coupled bearings, is a rear wheel (2) with a gear (7A) attached to the same, achieving an independent movement of the bottom bracket shell (3); coupled to the crankset or sprocket (5) is a chain (8B) that transmits the movement of the pedals (4) to a gear (7B) attached to a variable geared hub (12), which is supported by a support (13) coupled to the main frame (1) to achieve a dependent rotation of the chain (8B); in turn, on the other end of the geared hub (12) a gear is attached (7C) which receives the movement of the different speeds of the geared hub (12), transmitting this movement and energy by means of a chain (8A) to the gear (7A) and thus to the rear drive wheel (2) for moving the bicycle, the bicycle being protected by means of a mudguard (10) and a rubber caliper brake (11), likewise the chains (8A) and (8B) are protected by a chain guard (9A) and (9B). With this mechanism we achieve a safe and comfortable movement for the operator and with speeds that depend on the number of speeds the geared hub (12) has, which can be from 3 to 12 speeds.

To each end of the pedals (4) an arm (14) is connected by means of a bearing to achieve the complete rotation of the pedals (4), arranged on each arm is a footboard (15) that receives the operator's foot; arranged on the other end of each arm (14) is a linear bearing (16) which moves along a cylindrical shaft (17) that is coupled by means of bolts (18) to supports (19) attached to the main body of the bicycle (1), thereby achieving a smooth, quiet and safe movement, and preventing the accumulation of dirt on the guides from the movement of the arms (14) given that the linear bearings (16) are sealed.

It consists of a foldable steering column (24) which is fixed by means of an adjustment clamp (27) and arranged inside this column is a tube with the handlebars (26) which allows the height thereof to be adjusted by means of an adjustable adjustment pin (25), thereby achieving the comfort of being able to adjust the height to an suitable height according to the needs of the operator, both for riding and for transporting the bicycle inside a vehicle.

The handlebars consist of brake levers (28), connected to the brakes by means of cables (30A) and (30B), shifter (29) connected to the geared hub by means of a cable (30C).

Coupled to the lower part of the steering column is a fork (21) with a shock absorber (22) and rubber caliper brakes (23), where the front wheel (20) is installed.

**LIST**

| PART No: | PART NAME | QUANTITY |
|---|---|---|
| 1 | Main body or frame | 1 |
| 2 | Rear wheel | 1 |
| 3 | Bottom bracket shell | 1 |
| 4 | Pedals | 2 |
| 5 | Crankset or sprocket | 1 |
| 6 | Pedal axle | 1 |
| 7A | Gear - A | 1 |
| 7B | Gear - B | 1 |
| 7C | Gear - C | 1 |
| 8A | Chain - A | 1 |
| 8B | Chain - B | 1 |
| 9A | Chain guard - A | 1 |
| 9B | Chain guard - B | 1 |
| 10 | Mudguard | 1 |
| 11 | Rear brake | 1 |
| 12 | Geared hub | 1 |
| 13 | Geared hub support | 1 |
| 14 | Arm for footboard | 2 |
| 15 | Footboard | 2 |
| 16 | Linear bearing | 2 |
| 17 | Cylindrical shaft | 2 |
| 18 | Coupling bolts for cylindrical shaft | 4 |
| 19 | Cylindrical shaft support | 4 |
| 20 | Front wheel | 1 |
| 21 | Fork | 1 |
| 22 | Shock absorber | 1 |
| 23 | Front brakes | 1 |
| 24 | Steering column | 1 |
| 25 | Adjustment pin | 1 |
| 26 | Handlebars | 1 |
| 27 | Adjustment clamp | 1 |
| 28 | Brake lever | 2 |
| 29 | Shifter | 1 |
| 30A | Rear brake cable | 1 |
| 30B | Front brake cable | 1 |
| 30C | Shift cable | 1 |

## Claims

1. Urban elliptical bicycle with safe, easy and comfortable maneuverability, which includes a main body, handlebars, bottom bracket shell with pedals, connected by means of a chain to a geared hub and footboards, **CHARACTERIZED in that** it is made up of a pair of pedals (4), one of them with a crankset (5), both pedals (4) coupled on each end to an axle (6) located inside a bottom bracket shell (3) by means of 2 bearings and mounted on said shell, on two bearings, is a rear wheel (2) with a gear (7A) attached, to which a chain (8A) is coupled which, in turn, couples to another similar gear (7C) attached to one end of a variable geared hub (12); a chain (8B) is coupled to the crankset (5) connecting to a gear (7B) attached to the end of a variable geared hub (12).

2. Urban elliptical bicycle with safe, easy and comfortable maneuverability, **CHARACTERIZED in that** from each end of the pedals (4) an arm (14) is connected by means of a bearing, wherein the footboards (15) are arranged, and on the other end of this arm a sealed linear bearing (16) is arranged which moves on a cylindrical shaft (17) supported by means of two supports (19) attached to the main body of the bicycle (1).

3. Urban elliptical bicycle with safe, easy and comfortable maneuverability, **CHARACTERIZED in that** the main body has a total length between 130 and 150 cm and a height between 100 and 135 cm.

4. Urban elliptical bicycle with safe, easy and comfortable maneuverability, **CHARACTERIZED in that** it has a steering column (24) that is foldable by means of an adjustment clamp (27), and arranged on this column are the handlebars (26), the height thereof able to be adjusted by means of an adjustable adjustment pin (25).
